# EUROPÄISCHE PATENTSCHRIFT

(11) **EP 0 450 481 B1**
(45) Veröffentlichungstag und Bekanntmachung des Hinweises auf die Patenterteilung: **15.06.1994**
(21) Anmeldenummer: 91104846.0
(22) Anmeldetag: 27.03.1991
(51) Int. Cl.: B01D 53/36

(54) **Verfahren zur Abscheidung von kohlenstoffhaltigen und/oder stickoxidhaltigen Schadstoffen in Rauchgasen**
Process for removal of carbon- and nitrogen containing pollutants in flue gases
Procédé d'élimination de polluants contenant du charbon et/ou d'azote dans des gaz fumées

(30) Priorität: 02.04.1990 DE 4010566
(43) Veröffentlichungstag der Anmeldung: 09.10.1991
(73) Patentinhaber: Noell-KRC Umwelttechnik GmbH, 97064 Würzburg (DE)
(72) Erfinder: Drechsler, Daniel, Dipl.-Ing., W-8700 Würzburg (DE)
(74) Vertreter: Werner, Hans-Karsten, Dr.Dipl.-Chem.

(56) Entgegenhaltungen:
- EP-A- 0 217 045
- DE-A- 3 505 351
- GB-A- 2 008 967

## Beschreibung

Gegenstand der vorliegenden Erfindung ist ein Verfahren zur Abscheidung von kohlenstoffhaltigen und/oder stickoxidhaltigen Schadstoffen in staubarmen Rauchgasen durch katalytische Reduktion durch Eindüsen eines Reduktionsmittels in die heißen Rauchgase und Abkühlen des Rauchgases mittels eines Economizers.

Derartige Rauchgase entstehen bei starker Erhitzung oder Verbrennung von Substraten. So ist bekannt, daß Stickstoffoxide bei Temperaturen über 1500°C aus Stickstoff und Sauerstoff gebildet werden können. Werden weiterhin kohlenstoffhaltige Substrate verwendet, entstehen zusätzlich kohlenstoffhaltige Schadstoffe, wie zum Beispiel Kohlenmonoxid, aber auch Kohlenwasserstoffe, die das Rauchgas verunreinigen. Die Reinigung solcher derart verunreinigten Rauchgase erfolgt nach dem bisherigen Stand der Technik dadurch, daß das Rauchgas nach dem am Kessel angeordneten Economizer entnommen wird und in einem separaten Verfahrensschritt zusammen mit einem Reduktionsmittel in einen Reaktor eingeführt wird. Das Rauchgas wird anschließend über einen geeigneten Katalysator geleitet und weitgehend von Schadstoffen befreit.

Die GB-A-2 008 967 beschreibt ein Verfahren, bei welchem das Reduktionsmittel eingedüst wird im Temperaturbereich zwischen 700°C und 1300°C und bei welchem die Katalysatorflächen parallel zur Strömungsrichtung des Gases angeordnet sind, wobei sich der Katalysator im Temperaturbereich zwischen 300°C und 500°C befindet. Gegebenenfalls wird kurz vor dem Katalysator nochmals etwas Ammoniak eingedüst. Das Eindüsen des Ammoniaks erfolgt somit jeweils hinter den Wärmeübertragungsrohren oder dem Economizer.

Die EP-A-0 217 045 beschreibt ein ähnliches Verfahren, bei welchem ein Teil des Ammoniaks im Temperaturbereich zwischen 700°C und 1100°C eingedüst wird und ein weiterer Teil des Reduktionsmittels nach einem Wärmerückgewinnungsreaktor mit Gittersteinen, so daß die katalytische Umsetzung im Temperaturbereich zwischen 200°C und 500°C erfolgen kann:

Die Reinigung der Rauchgase in separaten Verfahrensschritten erfordert somit einen zusätzlichen apparativen und betriebstechnischen Aufwand und verursacht erhebliche Kosten.

Es besteht daher ein großes Bedürfnis nach einem Verfahren, das die Abscheidung dieser kohlenstoffhaltigen und/oder stickoxidhaltigen Schadstoffe in staubarmen Rauchgasen in einem Prozeßschritt ermöglicht und so eine einfachere und preiswertere Möglichkeit der Rauchgasreinigung zur Verfügung stellt. Es ist weiterhin notwendig, eine für die Reaktion ausreichende, möglichst homogene Mischung des Reduktionsmittels mit dem Rauchgas herzustellen.

Diese Aufgabe kann überraschend einfach dadurch gelöst werden, daß das Reduktionsmittel in den Zwischenraum einer Stufe des Economizers eingedüst wird, dieses in den Rohrbündeln des Economizers mit dem staubarmen Rauchgas vermischt wird, und das entstandene Reduktionsrauchgasgemisch mit einer Anströmungsgeschwindigkeit von > 6,5 m/sec hinter dem Economizer angeordnete Katalysatorlagen durchströmt.

Als Reduktionsmittel können vorzugsweise Ammoniak oder ammoniakbildende Verbindungen verwendet werden.

In einer besonders bevorzugten Ausführungsform sind die Katalysatorlagen in der erweiterten Rauchgasumlenkung diagonal angeordnet. In der ersten Lage erfolgt dann eine Minderung der Stickstoffoxide, während in der zweiten Lage die Reduzierung der kohlenstoffhaltigen Schadstoffe erfolgt. Als kohlenstoffhaltige Schadstoffe können Kohlenmonoxid und Kohlenwasserstoffe in dem Rauchgas enthalten sein. Als Katalysatoren werden aus dem Stand der Technik bekannte geeignete Katalysatoren verwendet.

In einer weiteren bevorzugten Ausführungsform kann ein Teil des Rauchgases in dem Verfahren rezirkuliert werden und die Vermischung des Reduktionsmittels mit dem Rauchgas zusätzlich in dem Rezirkulationsstrom erfolgen.

Der Economizer ist ein Wärmeaustauscher und dient der Vorwärmung des Kesselspeisewassers. Er enthält in mehreren Ebenen angeordnete Rohrbündel, an denen der Wärmeaustausch vorgenommen wird. Durch die Eindüsung des Reduktionsmittels in die Zwischenräume des Economizers wird das Reduktionsmittel in der danach angeordneten folgenden Rohrbündelschicht mit dem am Rohrbündel vorbeiströmenden Rauchgas durch Verwirbelung für die folgende katalytische Reduktion ausreichend vermischt.

In einer weiteren Ausführungsform kann zusätzlich vor der Abscheidung der kohlenstoffhaltigen und/oder stickoxidhaltigen Schadstoffe ein selektiv nichtkatalytisches Verfahren im Kessel zur Schadstoffminderung eingesetzt werden. Hierdurch können insbesondere bei schadstoffreichen Rauchgasen schon vor der Anwendung des erfindungsgemäßen Verfahrens in einer Vorstufe der NH₃-Schlupf und die CO-Emission herabgesetzt werden.

Voraussetzung für die Durchführung des erfindungsgemäßen Verfahrens ist weiterhin, daß das Rauchgas staubarm ist, um so eine Schädigung des Katalysators zu vermeiden.

Durch das erfindungsgemäße Verfahren wird auf einfache Weise eine hochhomogene Mischung des Reduktionsmittels mit dem Rauchgas erreicht. Die Eindüsung des Reduktionsmittels und die anschließende Vermischung mit dem Rauchgas erfolgt nicht mehr in einem separaten Verfahrensschritt mit zusätzlichem apparativen Aufwand, sondern wird an dem an der Anlage bereits vorhandenen Economizer durchgeführt.

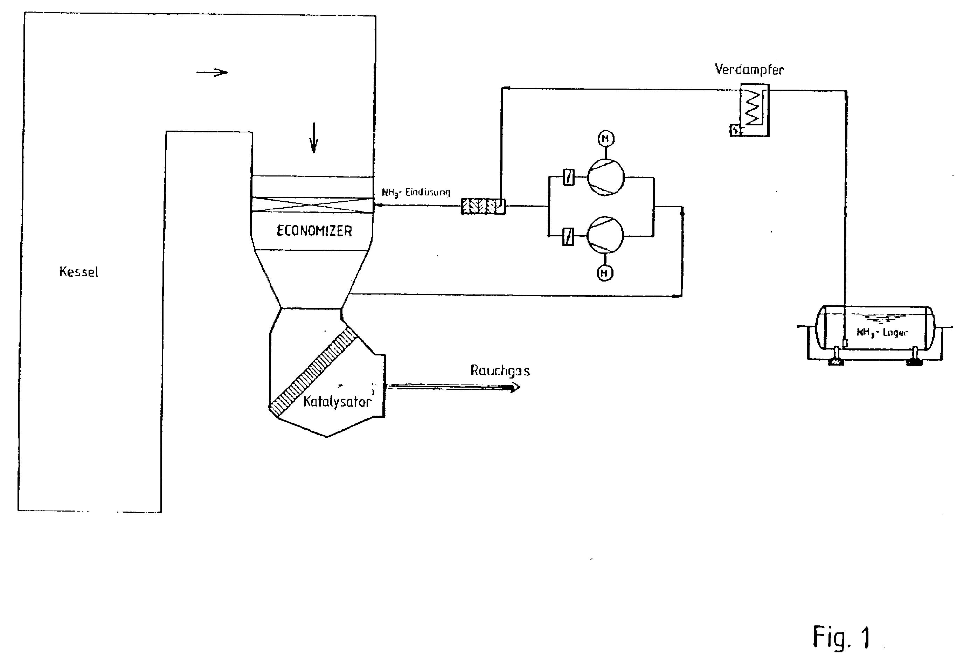

In der anliegeden Figur 1 ist das erfindungsgemäße Verfahren näher erläutert. Die Rauchgase gelangen aus dem Kessel in den Economizer. Erfindungsgemäß wird Ammoniak eingedüst in den Zwischenraum einer Stufe des Economizers. Die dort herrschenden Temperaturen sind schon zu niedrig für die nichtkatalytische Reduktion. Das im Economizer homogene Gemisch aus Rauchgas und Ammoniak wird weiter abgekühlt und gelangt mit den geeignet niedrigen Temperaturen zum Katalysator.

Die Figur 1 zeigt weiterhin die bevorzugte Ausgestaltung des Katalysators gemäß Anspruch 3. Weiterhin zeigt die Figur 1 eine Ausführungsform, bei der ein Teil des Rauchgases in dem Verfahren rezirkuliert wird, um bereits das Reduktionsmittel Ammoniak mit einer gewissen Menge von Rauchgas zu vermischen, bevor es in den Zwischenraum einer Stufe des Economizers eingedüst wird.

## Patentansprüche

1. Verfahren zur Abscheidung von kohlenstoffhaltigen und/oder stickoxidhaltigen Schadstoffen in staubarmen Rauchgasen durch katalytische Reduktion durch Eindüsen eines Reduktionsmittels in die heißen Rauchgase und Abkühlen des Rauchgases mittels eines Economizers, dadurch gekennzeichnet, daß das Reduktionsmittel in den Zwischenraum einer Stufe des Economizers eingedüst wird, dieses sich dann in den Rohrbündeln des Economizers mit dem staubarmen Rauchgas vermischt, und das entstandene Reduktionsrauchgasgemisch mit einer Anströmungsgeschwindigkeit von > 6,5 m/sec hinter dem Economizer angeordnete Katalysatorlagen durchströmt.

2. Verfahren nach Anspruch 1, dadurch gekennzeichnet, daß als Reduktionsmittel Ammoniak oder ammoniakbildende Verbindungen verwendet werden.

3. Verfahren nach Anspruch 1 oder 2, dadurch gekennzeichnet, daß die Katalysatorlagen in der erweiterten Rauchgasumlenkung diagonal angeordnet sind.

4. Verfahren nach Ansprüchen 1 bis 3, dadurch gekennzeichnet, daß als kohlenstoffhaltige Schadstoffe Kohlenmonoxid und/oder Kohlenwasserstoff in dem Rauchgas enthalten sind.

5. Verfahren nach Ansprüchen 1 bis 4, dadurch gekennzeichnet, daß vor der Abscheidung von kohlenstoffhaltigen und/oder stickoxidhaltigen Schadstoffen durch katalytische Reduktion schadstoffmindernde Maßnahmen im Kessel durch ein selektiv nichtkatalytisches Verfahren ergriffen werden.

## Claims

1. A process for the removal of carbonaceous and/or nitrous pollutants in low-dust flue gases through catalytic reduction by nozzle-jetting a reducing agent into the hot flue gases and cooling the flue gas by means of an economizer, characterized in that the reducing agent is nozzle-jetted into the intermediate space of one stage of the economizer, the reducing agent mixes with the low-dust flue gas in the pipe bundles of the economizer, and the reduced flue gas mixture formed passes catalyst layers arranged downstream of the economizer at an impinging velocity of > 6.5 m/s.

2. The process according to claim 1, characterized in that ammonia or ammonia-forming compounds are used as the reducing agent.

3. The process according to claim 1 or 2, characterized in that the catalyst layers are arranged diagonally in the extended flue gas deflection.

4. The process according to claims 1 to 3, characterized in that carbon monoxide and/or hydrocarbons are contained in the flue gas as the carbonaceous pollutants.

5. The process according to claims 1 to 4, characterized in that prior to removal of the carbonaceous and/or nitrous pollutants through catalytic reduction, pollutant-decreasing measures are taken in the tank using a selective non-catalytic process.

## Revendications

1. Procédé pour éliminer des substances polluantes contenant du carbone et/ou des oxydes d'azote dans des gaz de fumée pauvres en poussières, par réduction catalytique moyennant l'injection d'un agent réducteur dans les gaz de fumée chauds et refroidissement du gaz de fumée à l'aide d'un économiseur, caractérisé en ce que l'agent réducteur est injecté dans l'espace intercalaire d'un étage de l'économiseur et qu'il est alors mélangé aux gaz de fumée pauvres en poussière, dans les faisceaux de tubes de l'économiseur, et que le mélange de gaz de fumée et réducteur obtenu traverse, avec une vitesse de circulation > 6,5 m/s, des installations de catalyseur disposées en aval de l'économiseur.

2. Procédé selon la revendication 1, caractérisé en ce qu'on utilise comme agent réducteur de l'ammoniac ou des composés dégageant de l'ammoniac.

3. Procédé selon la revendication 1 ou 2, caractérisé en ce que les couches de catalyseur sont disposées en diagonale dans le conduit élargi de renvoi des gaz de fumée.

4. Procédé selon les revendications 1 à 3, caractérisé en ce que le gaz de fumée contient, comme substance polluante contenant du carbone, du monoxyde de carbone et/ou un hydrocarbure.

5. Procédé selon les revendications 1 à 4, caractérisé en ce qu'avant l'élimination des substances polluantes contenant du carbone et/ou des oxydes d'azote au moyen d'une réduction catalytique, on met en oeuvre des dispositions réduisant les substances polluantes, dans l'enceinte de chauffage, en mettant en oeuvre un procédé sélectif non catalytique.
